(19) Europäisches Patentamt
European Patent Office
Office européen des brevets

(11) Veröffentlichungsnummer: **0 276 382 B1**

(12) **EUROPÄISCHE PATENTSCHRIFT**

(45) Veröffentlichungstag der Patentschrift:
07.02.90

(51) Int. Cl.⁴: **F16D 23/06**

(21) Anmeldenummer: 87116276.4

(22) Anmeldetag: 05.11.87

(54) Synchronisiereinrichtung für Wechselgetriebe, insbesondere für Kraftfahrzeuge.

(30) Priorität: 21.01.87 DE 3701536

(43) Veröffentlichungstag der Anmeldung:
03.08.88 Patentblatt 88/31

(45) Bekanntmachung des Hinweises auf die Patenterteilung:
07.02.90 Patentblatt 90/6

(84) Benannte Vertragsstaaten:
DE FR GB IT SE

(56) Entgegenhaltungen:
EP-A- 0 005 645
EP-A- 0 195 706
DE-A- 2 411 516

(73) Patentinhaber: FORD-WERKE AKTIENGESELLSCHAFT,
Werk Köln-Niehl Henry-Ford-Strasse Postfach 60 40 02,
D-5000 Köln 60(DE)
(84) Benannte Vertragsstaaten: DE IT SE

(73) Patentinhaber: FORD MOTOR COMPANY LIMITED,
Eagle Way, Brentwood Essex CM13 3BW(GB)
(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex(FR)
(84) Benannte Vertragsstaaten: FR

(72) Erfinder: Diehl, Axel, Donatusstrasse 38,
D-4052 Korschenbroich(DE)

(74) Vertreter: Ritzkowsky, Harald, Dipl.-Ing., Ford-Werke
Aktiengesellschaft Patentabteilung NH/DRP
Henry-Ford-Strasse, D-5000 Köln 60(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Synchronisiereinrichtung für Wechselgetriebe, insbesondere für Kraftfahrzeuge, der im Oberbegriff des Patentanspruches erläuterten Art.

Aus der EP-A 0 195 706 ist eine Kupplungseinrichtung für Wechselgetriebe, insbesondere für Kraftfahrzeuge, mit einer auf der Außenverzahnung einer Kupplungsnabe über ihre Innenverzahnung verschiebbaren Schaltmuffe bekannt, deren Enden mit an benachbarten, freilaufenden Zahnrädern vorgesehenen Kupplungszähnen in Eingriff bringbar sind und wobei die Schaltmuffe an ihrer Innenverzahnung unterschiedliche Gruppen von Zähnen aufweist, von denen die eine Gruppe von Zähnen an der einen Seitenflanke Ausnehmungen aufweist, während die andere Gruppe von Zähnen auf der anderen Seitenflanke Ausnehmungen aufweist, die mit den entsprechenden Seitenflanken der Kupplungszähne an den Zahnrädern zusammenwirken um bei einer Drehmomentübertragung eine selbsttätige Axialbewegung der Schaltmuffe zu verhindern.

Bei dieser bekannten Kupplungseinrichtung wird durch eine wechselseitige Verbreiterung der Zähne der Schaltmuffe eine von den Ausnehmungen unbeeinträchtigte Führung der Schaltmuffe auf ihrer Kupplungsnabe sichergestellt.

Obwohl bei dieser bekannten Kupplungseinrichtung bereits Sperrsynchronringe vorgesehen sind, wird kein Hinweis darauf gegeben, daß die Ausnehmungen an den Zähnen der Schaltmuffe auch in Verbindung mit den Sperrsynchronringen ein glattes Durchschalten beeinträchtigen können und dadurch eine hakende Schaltbetätigung und ein zusätzlicher Verschleiß an den Sperrsynchronringen bewirkt wird.

Die Aufgabe der Erfindung ist es, eine Synchronisiereinrichtung für Wechselgetriebe, insbesondere für Kraftfahrzeuge, der im Oberbegriff des Patentanspruches erläuterten Art zu schaffen, bei der ein störungsfreier, geradliniger Schaltablauf erzielt wird, der frei von Verhakungen ist und dadurch den Verschleiß an den Synchroniereinrichtungen verringern hilft.

Gemäß der Erfindung wird diese Aufgabe gelöst, indem bei einer Synchronisiereinrichtung für Wechselgetriebe, insbesondere für Kraftfahrzeuge, der im Oberbegriff des Patentanspruches erläuterten Art, die im Kennzeichenteil des Patentanspruches aufgezeigten Merkmale vorgesehen werden.

Dadurch, daß die eine Gruppe von Zähnen, die Haltezähne an beiden Seitenflanken Ausnehmungen und die andere Gruppe von Zähnen, die Führungszähne an einander gegenüberliegenden Seitenflanken keine Ausnehmungen aufweisen und wobei die Führungszähne um das Maß der Ausnehmung schmäler sind als die Haltezähne mit beidseitigen Ausnehmungen, während die den glatten Seitenflanken benachbarten Zähne des Synchronringes um dieses Maß verbreitet sind, wird jeweils eine Führung für den Sperrsynchronring bereitgestellt, die ein Einfallen der Sperrzähne in die Ausnehmungen der Haltezähne der Schaltmuffe, die für die Kupplungszähne an den Zahnrädern vorgesehen und erforderlich sind, vermeidet.

Die Erfindung wird anhand des in der beiliegenden Zeichnung gezeigten Ausführungsbeispieles näher erläutert. Es zeigt:

Fig. 1 eine teilweise Aufrollung des Zahneingriffes der Synchronisiereinrichtung im Bereich zwischen der Schaltmuffe, dem Sperrsynchronring und den Kupplungszähnen der Zahnräder;

Fig. 2 einen schematischen Bewegungsablauf eines Schaltvorganges bei einer herkömmlichen Synchronisiereinrichtung und

Fig. 3 den Bewegungsablauf eines Schaltvorganges bei der modifizierten Synchronisiereinrichtung.

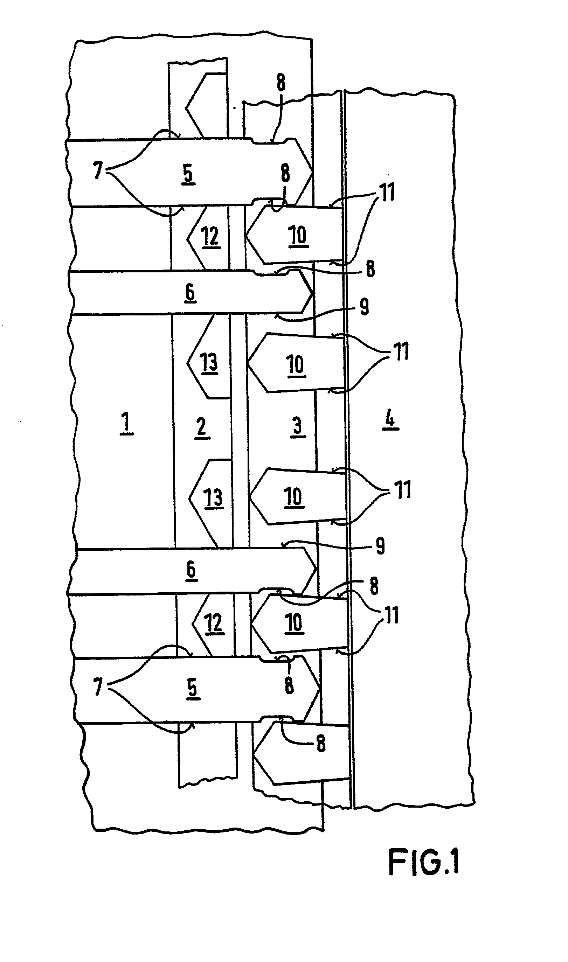

Bei der in Figur 1 gezeigten Aufrollung wirkt die Schaltmuffe 1 über einen Sperrsynchronring 2 mit einer Kupplungsverzahnung 3 an einem benachbarten Zahnrad 4 zusammen.

Die Schaltmuffe 1 weist hierbei eine Innenverzahnung auf, die mit unterschiedlichen Gruppen von Zähnen 5 und 6 versehen ist, von denen die eine Gruppe von Haltezähnen 5 an beiden Seitenflanken 7 mit Ausnehmungen 8 versehen sind, während die andere Gruppe von Führungszähnen 6 an einander gegenüberliegenden Seitenflanken 9 keine Ausnehmungen 8 aufweisen.

Die Kupplungsverzahnung 3 am Zahnrad 4 weist Kupplungszähne 10 auf, die einen Hinterschnitt 11 besitzen, mittels dem sie mit den Ausnehmungen 8 an den Haltezähnen 5 der Schaltmuffe 1 zusammenwirken um bei einer Drehmomentübertragung eine selbsttätige Axialbewegung der Schaltmuffe 1 zu verhindern.

Der Sperrsynchronring 2 weist eine Vielzahl von Sperrzähnen 12 auf, die in ihrer Breite im wesentlichen den Kupplungszähnen 10 entsprechen.

Die jeweils einander gegenüberliegenden Seitenflanken 9 von Führungszähnen 6 der Schaltmuffe 1 weisen jedoch nicht nur keine Ausnehmungen auf, sondern diese Führungszähne sind in ihrer Breite auch um einen vorgegebenen Betrag verringert, der sicherstellt, daß die Führungszähne die Sicherungswirkung der Haltezähne 5 gegen unerwünschte Gangspringer nicht beeinträchtigen.

Die mit diesen Führungszähnen 6 und deren glattflächigen Seitenflanken 9 zusammenwirkenden Sperrzähne 13 des Sperrsynchronringes 2 sind an ihrer entsprechenden Seite in ihrer Breite vergrößert, derart, daß eine glattflächige Führung zwischen den Führungszähnen 6 und den verbreiterten Sperrzähnen 13 des Synchronringes 2 erzielt wird.

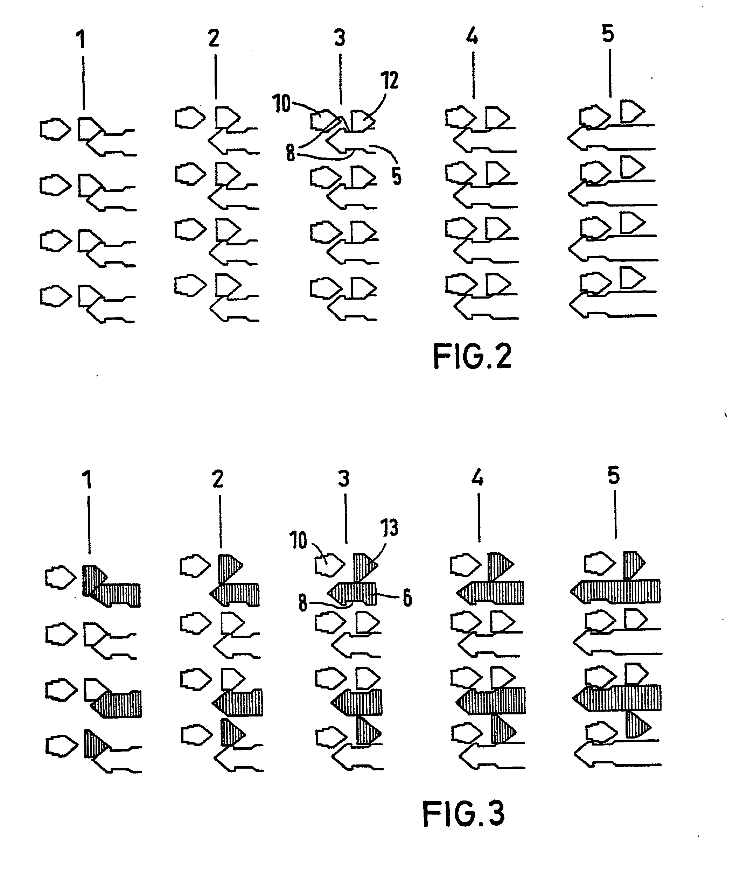

Wie sich aus einer Betrachtung des Bewegungsablaufes bei einer herkömmlichen Synchronisiereinrichtung gemäß Figur 2 erkennen läßt, siehe insbesondere Phase 3, tritt zwischen dem Haltezahn 5 der Schaltmuffe nach erfolgter Hauptsynchronisierung ein Verhaken des Sperrzahnes 12 des Synchronringes in der Ausnehmung 8 ein, wodurch ein glattes Durchschalten bis zum Kupplungszahn 10 gestört wird.

Wie aus einer Betrachtung des Bewegungsablaufes bei einer modifizierten Synchronisiereinrichtung gemäß Figure 3 insbesondere Phase 3 erkennen läßt, wird durch den einseitig in seiner Breite verringerten und glattflächigen Führungszahn 6 der Schaltmuffe ein Verhaken des einseitig erweiterten Sperrzahnes 13 des Synchronringes vermieden und dennoch wird nach dem glatten Durchschalten in den Kupplungszahn 10 und nachfolgender Drehmomentübertragung sichergestellt, daß der Hinterschnitt am Kupplungszahn 10 mit der Ausnehmung 8 zusammenwirkt um ein Herausspringen des eingelegten Ganges zu verhindern.

## Patentansprüche

Synchronisiereinrichtung für Wechselgetriebe, insbesondere für Kraftfahrzeuge, mit einer auf der Außenverzahnung einer Kupplungsnabe über ihre Innenverzahnung verschiebbaren Schaltmuffe (1), deren Enden unter Mitwirkung von Sperrsynchronringen (2) mit an benachbarten, freilaufenden Zahnrädern (4) vorgesehenen Kupplungszähnen (10) in Eingriff bringbar sind und wobei die Schaltmuffe (1) an ihrer Innenverzahnung unterschiedliche Gruppen von Zähnen (5 und 6) aufweist und an den Enden der Kupplungszähne (5) der Schaltmuffe (1) an den Seitenflankenausnehmungen (8) vorgesehen sind, die mit den Seitenflanken der Kupplungszähne (11) der Zahnräder (4) zusammenwirken um bei einer Drehmomentübertragung eine selbsttätige Axialbewegung der Schaltmuffe (1) zu verhindern, dadurch gekennzeichnet, daß

- die eine Gruppe von Zähnen, die Haltezähne (5) an beiden Seitenflanken (7) Ausnehmungen (8) und die andere Gruppe von Zähnen, die Führungszähne (6) an einander gegenüberliegenden Seitenflanken (9) keine Ausnehmungen aufweisen und um das Maß der Ausnehmungen (8) schmäler sind als die Haltezähne (5) mit beiderseitigen Ausnehmungen (8) während die den glatten Seitenflanken (9) benachbarten Zähne (13) des Synchronringes (2) um dieses Maß verbreitert sind.

## Claims

A synchronizing device for change-speed transmissions, in particular for motor vehicles, with a gearshift sleeve (1) which is displaceable on the external toothing of a clutch hub by way of its internal toothing and the ends of which can be brought into engagement with clutch teeth (10) provided on adjacent freewheeling gearwheels (4) with the cooperation of locking synchronizing rings (2), the gearshift sleeve (1) being provided on its internal being with different groups of teeth (5 and 6), and the ends of the clutch teeth (5) of the gearshift sleeve (1) being provided on the lateral flank recesses (8) which cooperate with the lateral flanks of the clutch teeth (11) of the gearwheels (4) in order to prevent a spontaneous axial movement of the gearshift sleeve (1), characterized in that one group of teeth, the holding teeth (5) on both lateral flanks (7), comprises recesses (8) and the other group of teeth, the guide teeth (6) on mutually opposite lateral flanks (9), comprises no recesses and is narrower by the amount of the recesses (8) as compared with the holding teeth (5) with recesses (8) on both sides, while the teeth (13) of the synchronizing ring (2) adjacent the smooth lateral flanks (9) are widened by this amount.

## Revendications

Dispositif de synchronisation pour boîtes de vitesses, notamment pour véhicules automobiles, comportant un manchon d'accouplement (1) pouvant coulisser au moyen de sa denture intérieure sur la denture extérieure d'un moyeu d'accouplement, les extrémités dudit manchon d'accouplement (1) pouvant s'accoupler, avec le concours de bagues de synchronisation de blocage (2), avec des dents d'accouplement (10) prévues sur des roues dentées (4) tournant folles et voisines, le manchon d'accouplement (1) présentant sur sa denture intérieure différents groupes de dents (5 et 6), et des évidements latéraux (8) des flancs étant prévus à l'extrémité des dents de retenue (5) du manchon d'accouplement (1), lesdits évidements (8) coopérant avec les flancs (11) des dents d'accouplement (10) des roues dentées (4), de façon à empêcher un déplacement axial automatique du manchon d'accouplement (1) lors d'une transmission de couple de rotation, caractérisé en ce que,

- l'un des groupes de dents est formé par les dents de retenue (5) pourvues d'évidements (8) sur leurs deux flancs (7), et l'autre groupe de dents est formé par les dents de guidage (6) dont les flancs (9) situés en vis-à-vis ne présentent pas d'évidements, et lesdites dents de guidage (6) sont réduites en largeur de la dimension des évidements (8) par rapport aux dents de retenue (5) pourvues d'évidements (8) sur leurs deux flancs, tandis que les dents (13) de la bague de synchronisation (2), situées à proximité des flancs rectilignes (9), sont élargies de cette même dimension.

FIG.1

FIG.2

FIG.3